(19) Europäisches Patentamt
European Patent Office
Office européen des brevets

(11) EP 4 123 459 A1

(12) EUROPEAN PATENT APPLICATION
published in accordance with Art. 153(4) EPC

(43) Date of publication:
25.01.2023 Bulletin 2023/04

(51) International Patent Classification (IPC):
G06F 11/22 $^{(2006.01)}$

(21) Application number: 20925764.1

(52) Cooperative Patent Classification (CPC):
G05B 19/41805; G05B 19/41875; G06F 11/22

(22) Date of filing: 18.03.2020

(86) International application number:
PCT/JP2020/012144

(87) International publication number:
WO 2021/186650 (23.09.2021 Gazette 2021/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: FUJITSU LIMITED
Kawasaki-shi, Kanagawa 211-8588 (JP)

(72) Inventors:
• MARUYAMA, Kazunori
Kawasaki-shi, Kanagawa 211-8588 (JP)
• YAMAZAKI, Takashi
Kawasaki-shi, Kanagawa 211-8588 (JP)
• SOEDA, Takeshi
Kawasaki-shi, Kanagawa 211-8588 (JP)

(74) Representative: Hoffmann Eitle
Patent- und Rechtsanwälte PartmbB
Arabellastraße 30
81925 München (DE)

(54) **INFORMATION PROCESSING DEVICE, SEARCH METHOD, AND SEARCH PROGRAM**

(57) An information processing apparatus generates, in a case where a plurality of products is manufactured by using a plurality of parts classified into a plurality of part types, an initial order in which the plurality of parts is arranged in order on the basis of part quality, for each of the plurality of part types. The information processing apparatus sets a predetermined range in which a part whose order is undetermined within the initial order is at a head, generates a plurality of states in which the order of the plurality of parts within the predetermined range is different from each other, allocates, for each state, the plurality of parts included in the predetermined range to the plurality of products for each of the plurality of part types in order from the head of the predetermined range, calculates, for each state, product quality of each of the plurality of products to which the plurality of parts is allocated, and repeats order search that determines the order of at least a part of the parts in the predetermined range on the basis of the product quality calculated for each state, while changing a position of the predetermined range in the initial order each time the order within the predetermined range is determined.

FIG. 13

EP 4 123 459 A1

**Description**

FIELD

The present invention relates to an information processing apparatus, a search method, and a search program.

BACKGROUND

In a manufacturing site where a plurality of parts is assembled to produce a product, quality of each part is controlled in order to control product quality. Specifically, a tolerance is set for quality of each part, and product quality is kept within the tolerance by using only parts within the tolerance. Although product quality may be improved and made closer to design values by more strictly controlling part quality tolerances, it is difficult to completely eliminate part quality errors.

In recent years, a plurality of pieces of stock is held for each part having a variation in quality within a tolerance and a combination of parts is selected from the pieces of stock to improve product quality. For example, there is known a technology of searching for an explanatory variable that optimizes an objective variable by using a part number of each part used for each product as the explanatory variable and product quality as the objective variable, and using a restriction condition that a part having the same number is not used twice. Furthermore, there is known a technology of reducing the number of candidates by limiting a combination to include parts of a specific type in a specific quality area. Furthermore, there is known a technology of predicting product characteristics with respect to a combination of parts by machine learning.

CITATION LIST

PATENT DOCUMENT

Patent Document 1: International Publication Pamphlet No. WO 2002/024399
Patent Document 2: Japanese Laid-open Patent Publication No. 2010-217982

SUMMARY

[TECHNICAL PROBLEM]

However, even when any one of the technologies described above is used, in a case where the number of part types is large or the number of pieces of stock of parts is large, the number of combinations becomes enormous, and it is difficult to search for an optimum solution in a short time. For example, when there are seven types of parts, each of which has ten pieces of stock, and ten products are manufactured, the number of combinations of the parts is $8 \times 10^{46}$. As the number of part types or the number of pieces of stock increases, the number of combinations increases by power, so that the larger the scale, the longer a search time for an optimum solution.

In one aspect, an object is to provide an information processing apparatus, a search method, and a search program capable of shortening a search time for an optimum combination of parts that improves product quality.

[SOLUTION TO PROBLEM]

In a first idea, an information processing apparatus includes: a generation unit that generates, in a case where a plurality of products is manufactured by using a plurality of parts classified into a plurality of part types, an initial order in which the plurality of parts is arranged in order on the basis of part quality, for each of the plurality of part types; and a search unit that searches for a first order of the plurality of parts in which product quality of each of the plurality of products becomes optimum by executing processing of determining an order of the parts in the initial order after changing the order in a predetermined range as a part of the initial order, while sequentially changing a position of the predetermined range in the initial order. The search unit sets the predetermined range in which a part whose order is undetermined within the initial order is at a head, generates a plurality of states in which the order of the plurality of parts within the predetermined range is different from each other, allocates, for each of the plurality of states, the plurality of parts included in the predetermined range to the plurality of products for each of the plurality of part types in order from the head of the predetermined range, calculates, for each of the plurality of states, the product quality of each of the plurality of products to which the plurality of parts is allocated, and repeats order search that determines the order of at least a part of the parts in the predetermined range on the basis of the product quality calculated for each of the plurality of states, while changing the position of the predetermined range in the initial order each time the order within the predetermined range is determined.

According to an aspect of the embodiments, an information processing apparatus includes a generation unit that generates, in a case where a plurality of products is manufactured by using a plurality of parts classified into a plurality of part types, an initial order in which the plurality of parts is arranged in order on the basis of part quality, for each of the plurality of part types; and a search unit that searches for a first order of the plurality of parts in which product quality of each of the plurality of products becomes optimum by executing processing of determining an order of the parts in the initial order after changing the order in a predetermined range as a part of the initial order, while sequentially changing a position of the predetermined range in the initial order, wherein the search unit sets the predetermined range in which a part whose order is undetermined within the initial order is at a head, generates a plurality of states in which the order of the plurality of parts within the predetermined range is different from each other, allocates, for each of the plurality of states, the plurality of parts included in the predetermined range to the plurality of products for each of the plurality of part types in order from the head of the predetermined range, calculates, for each of the plurality of states, the product quality of each of the plurality of products to which the plurality of parts is allocated, and repeats order search that determines the order of at least a part of the parts in the predetermined range on the basis of the product quality calculated for each of the plurality of states, while changing the position of the predetermined range in the initial order each time the order within the predetermined range is determined.

[ADVANTAGEOUS EFFECTS OF INVENTION]

According to one embodiment, it is possible to shorten a search time for an optimum combination of parts that improves product quality.

BRIEF DESCRIPTION OF DRAWINGS

FIG. 1 is a diagram for describing an information processing apparatus according to a first embodiment;
FIG. 2 is a functional block diagram illustrating a functional configuration of the information processing apparatus according to the first embodiment;
FIG. 3 is a diagram for describing a product allocation rule according to the first embodiment;
FIG. 4 is a diagram for describing part information according to the first embodiment;
FIG. 5 is a diagram for describing quality information according to the first embodiment;
FIG. 6 is a diagram for describing an optimization result;
FIG. 7 is a diagram for describing generation of an initial order;
FIG. 8 is a diagram for describing another example of the generation of the initial order;
FIG. 9 is a diagram for describing target order setting;
FIG. 10 is a diagram for describing part allocation to a product;
FIG. 11 is a diagram for describing partial replacement;
FIG. 12 is a diagram for describing a specific example of searching for an optimum solution;
FIG. 13 is a diagram for describing product allocation after the optimum solution is determined;
FIG. 14 is a flowchart illustrating a flow of search processing;
FIG. 15 is a diagram for describing another example of searching for an optimum solution;
FIG. 16 is a diagram for describing an example of utilization of an annealing computer; and
FIG. 17 is a diagram for describing a hardware configuration example.

DESCRIPTION OF EMBODIMENTS

Hereinafter, embodiments of an information processing apparatus, a search method, and a search program disclosed in the present application will be described in detail with reference to the drawings. Note that this invention is not limited by the embodiments. Furthermore, the individual embodiments may be appropriately combined within a range without inconsistency.

[First Embodiment]

[Overall Configuration]

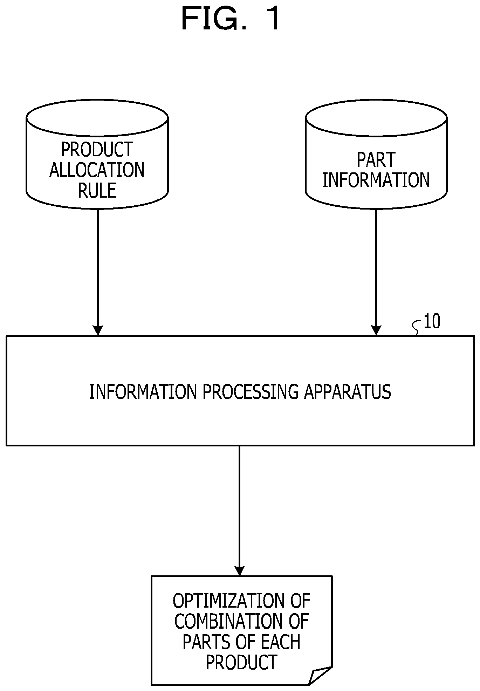

FIG. 1 is a diagram for describing an information processing apparatus 10 according to a first embodiment. The information processing apparatus 10 illustrated in FIG. 1 is, for example, a computer that executes quality control in a manufacturing industry, and achieves improvement in product quality at a manufacturing site for assembling parts.
As illustrated in FIG. 1, the information processing apparatus 10 allocates a part number to be assembled to each product from an order in which part numbers of an entire stock of parts are arranged according to a predetermined product allocation rule, selects a combination of parts by determining the order, and executes optimization of the combination of parts of each product. At this time, by starting search from an order in which the entire stock of the parts is rearranged in descending order of quality variations, and by limiting the search to a predetermined search range and determining the order one by one in order from the head, the information processing apparatus 10 may shorten a search time for an optimum combination of parts that improves product quality.

[Functional Configuration]

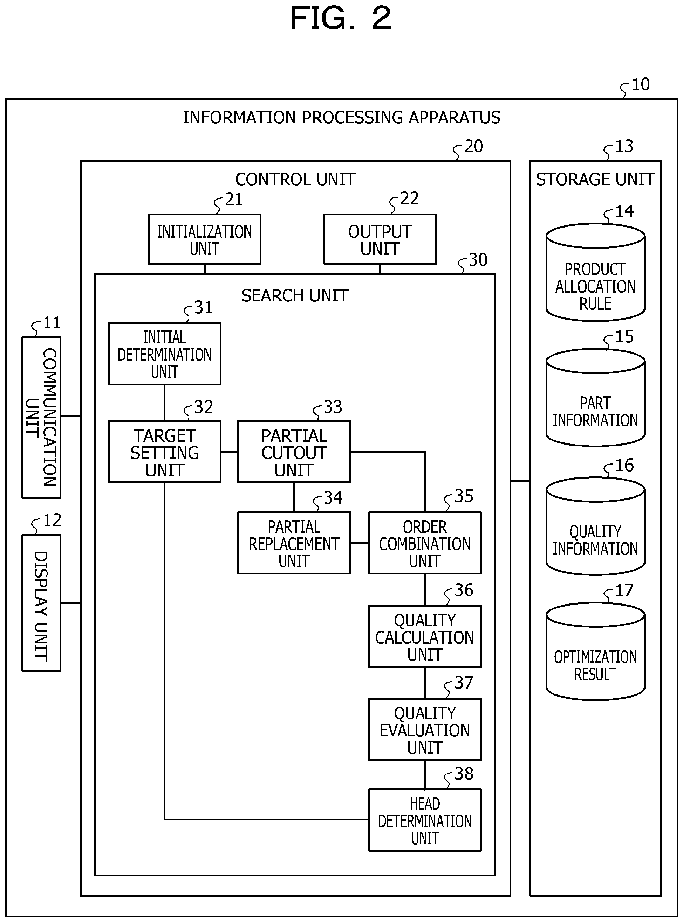

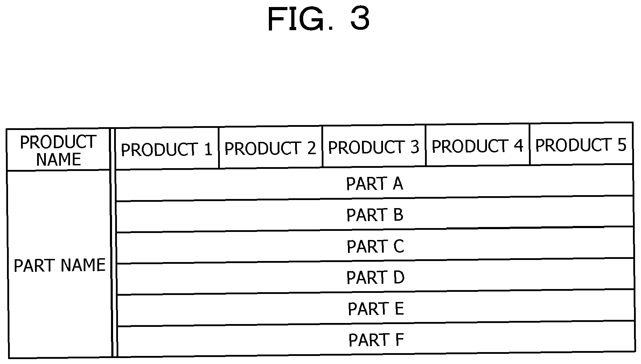

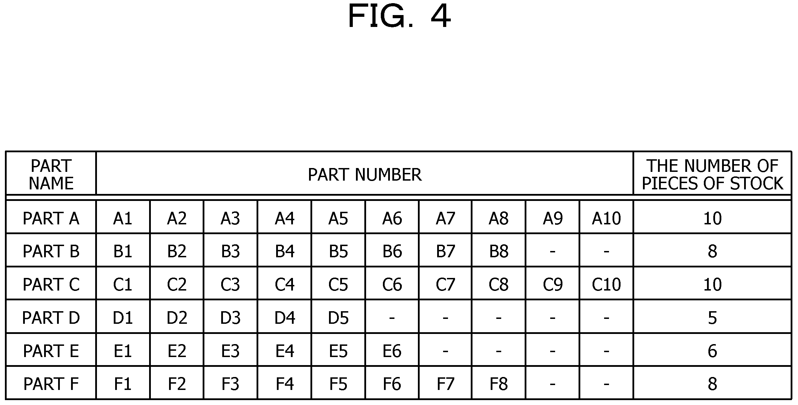

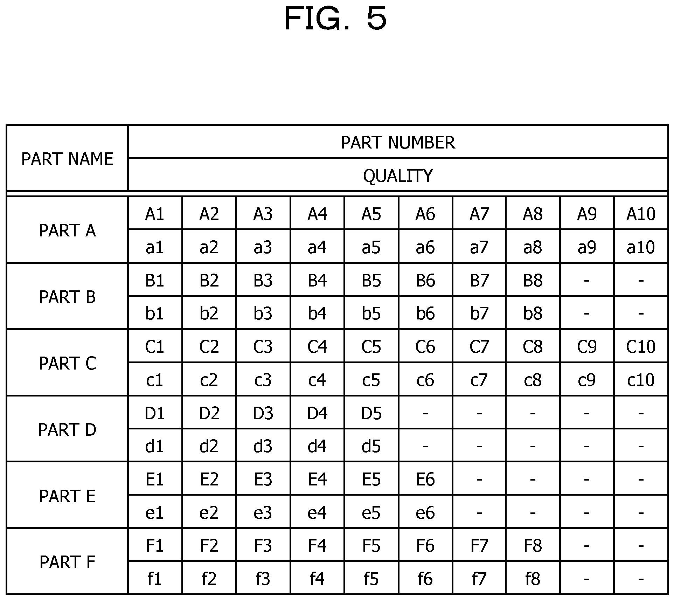

FIG. 2 is a functional block diagram illustrating a functional configuration of the information processing apparatus 10 according to the first embodiment. As illustrated in FIG. 2, the information processing apparatus 10 includes a communication unit 11, a display unit 12, a storage unit 13, and a control unit 20.
The communication unit 11 is a processing unit that controls communication with another device, and is implemented by, for example, a communication interface. For example, the communication unit 11 receives, from a terminal used by an administrator, a processing start instruction, an allocation rule to a product, stock information of each part, and the like. Furthermore, the communication unit 11 transmits, to the terminal used by the administrator, a result of optimization of part allocation, or the like.
The display unit 12 is a processing unit that displays each piece of information, and is implemented by, for example, a display or a touch panel. The display unit 12 displays a result of optimization of part allocation, or the like.
The storage unit 13 is a processing unit that stores various types of data, programs executed by the control unit 20, and the like, and is implemented by, for example, a memory or a hard disk. The storage unit 13 stores a product allocation rule 14, part information 15, quality information 16, and an optimization result 17.
The product allocation rule 14 is information in which each product and parts of each type used to generate each product are associated with each other, and is set by the administrator or the like. FIG. 3 is a diagram for describing the product allocation rule 14 according to the first embodiment. As illustrated in FIG. 3, the product allocation rule 14 is information in which a "product name" and a "part name" are associated with each other.
The "product name" is information regarding a product to be generated, and the "part name" is information regarding parts used in the product. In an example of FIG. 3, it is indicated that each product of products 1 to 5 may be generated by six parts, which are a part A, a part B, a part C, a part D, a part E, and a part F. Note that, in the example of FIG. 3, an example in which all products are generated with the same parts and the same number of parts is indicated, but the present invention is not limited to this. The number of parts or the like may be different for each product.
The part information 15 indicates stock information of parts of a type of each part (part type) used in a product. FIG. 4 is a diagram for describing the part information 15 according to the first embodiment. As illustrated in FIG. 4, the part information 15 is information in which a "part name", a "part number", and "the number of pieces of stock" are associated with each other.
The "part name" is information regarding each part having a different type, the "part number" is information that identifies each part for each type, and the "the number of pieces of stock" is the number of pieces of stock of a part of each type. In an example of FIG. 4, the part type "part A" indicates that there are ten pieces of stock of parts having the part numbers "A1, A2, A3, A4, A5, A6, A7, A8, A9, and A10". Similarly, the part type "part B" indicates that there are eight pieces of stock having the part numbers "B1 to B8", and the part type "part C" indicates that there are ten pieces of stock having the part numbers "C1 to C10". The part type "part D" indicates that there are five pieces of stock having the part numbers "D1 to D5", the part type "part E" indicates that there are six pieces of stock having the part numbers "E1 to E6", and the part type "part F" indicates that there are eight pieces of stock having the part numbers "F1 to F8". Note that, in the present embodiment, the part type "part A" may be simply described as "part A", and the part having the part number A1 may be simply described as "A1", "part A1", or the like.
The quality information 16 is information regarding quality of each part. FIG. 5 is a diagram for describing the quality information 16 according to the first embodiment. As illustrated in FIG. 5, the quality information is information in which a "part name", a "part number", and "quality" are associated with each other. The "part name" is information that specifies each part, the "part number" is information that specifies a part number of each part, and the "quality" is information that indicates quality of a part corresponding to each part number.

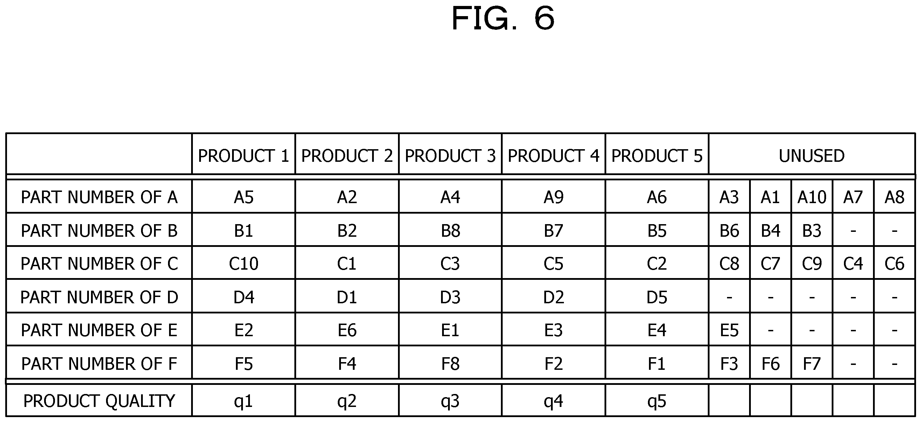

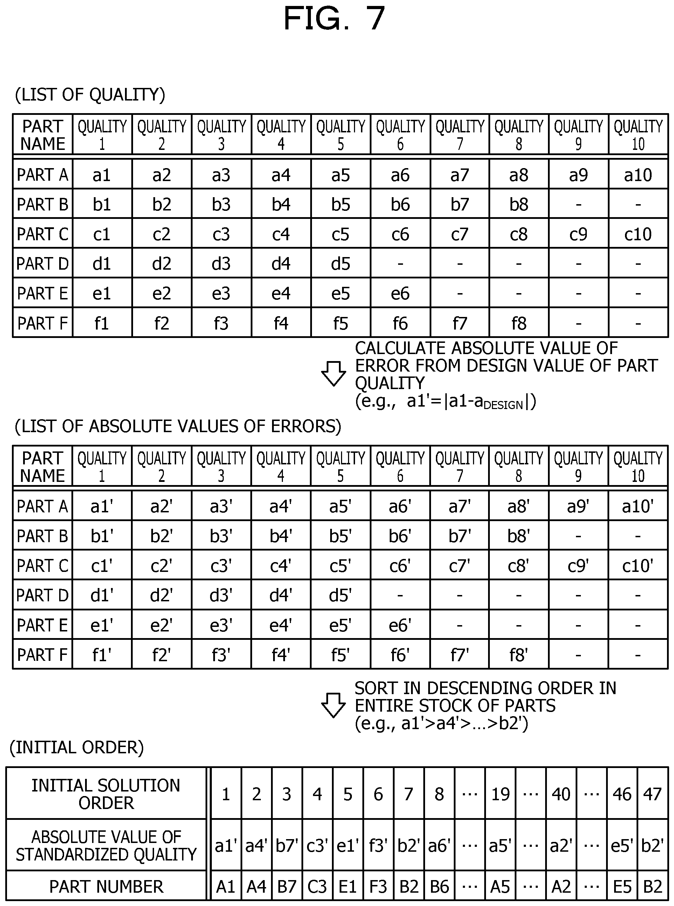

In an example of FIG. 5, it is indicated that quality of the part having the part number A1 of the part A is "a1", quality of the part having the part number A2 is "a2", quality of the part having the part number A3 is "a3", and quality of the part having the part number A4 is "a4". Furthermore, it is indicated that quality of the part having the part number A5 is "a5", quality of the part having the part number A6 is "a6", quality of the part having the part number A7 is "a7", and quality of the part having the part number A8 is "a8". Note that, in the present embodiment, in order to simplify description, the part numbers may be omitted when the quality information 16 is illustrated. However, unless specific description is particularly added as in FIGs. 6 and 7, it is assumed that the part numbers are described in order from the youngest number, such as A1 to A10.

The optimization result 17 is information indicating an allocation result of parts by which quality of each product is optimized. The optimization result 17 stored here is generated by a search unit 30 described later. FIG. 6 is a diagram for describing the optimization result 17. As illustrated in FIG. 6, the optimization result 17 includes information in which an allocation result of each part and product quality are associated with each other for each product, and information regarding an unused part.

In an example of FIG. 6, it is indicated that, for the product 1, a state where the part number A5 of the part A, the part number B1 of the part B, the part number C10 of the part C, the part number D4 of the part D, the part number E2 of the part E, and the part number F5 of the part F are allocated and the product quality is q1 is determined to be an optimum value. Note that A3, A1, A10, A7, and A8 of the part A indicate that they are part numbers that have not been allocated to any product and have been determined to be unused.

The control unit 20 is a processing unit that is in charge of the entire information processing apparatus 10, and is implemented by, for example, a processor. The control unit 20 includes an initialization unit 21, an output unit 22, and the search unit 30. Note that the initialization unit 21, the output unit 22, and the search unit 30 may be implemented as an electronic circuit such as a processor, or may be implemented as a process executed by the processor.

The initialization unit 21 is a processing unit that executes various types of initialization before order search for optimizing a combination of parts is executed. For example, by instruction operation by the administrator, the initialization unit 21 generates the product allocation rule 14 and stores the product allocation rule 14 in the storage unit 13, acquires stock information of parts and stores the part information 15 in the storage unit 13, or generates the quality information 16 by referring to information regarding quality of each part and stores the quality information 16 in the storage unit 13. Note that these pieces of information may also be generated and stored by the administrator.

The output unit 22 is a processing unit that displays and outputs various types of information to the display unit 12. For example, the output unit 22 reads the optimization result 17 from the storage unit 13, displays and outputs the optimization result 17 to the display unit 12, or transmits the optimization result 17 to a terminal of the administrator.

The search unit 30 is a processing unit that includes an initial determination unit 31, a target setting unit 32, a partial cutout unit 33, a partial replacement unit 34, an order combination unit 35, a quality calculation unit 36, a quality evaluation unit 37, and a head determination unit 38, and generates the optimization result 17 that indicates an allocation result of parts by which quality of each product is optimized.

In other words, the search unit 30 sorts part numbers to be assembled to each product according to a predetermined rule from an order in which part numbers of an entire stock of all parts are arranged. Then, when the search unit 30 rearranges the order and selects a combination of parts, the search unit 30 searches for an optimum solution by limiting the search to only a predetermined range and determining the order one by one in order from the head to the final order.

Specifically, the search unit 30 generates an initial order in which parts of each part type used for generation of each product are arranged on the basis of quality. Then, the search unit 30 generates the optimization result 17 by setting, when searching for an order of each part by which quality of each product becomes optimum from the initial order, a predetermined range in which a part whose order is undetermined is at the head, generating each state in which the parts within the predetermined range are rearranged, calculating, for each state, quality of each product to which each part is allocated in an order from the head for each part type, and repeating order search to determine the order within the predetermined range on the basis of the quality of each product in each state while changing a position of the predetermined range each time the order within the predetermined range is determined.

The initial determination unit 31 is a processing unit that generates an initial order in which each part is arranged on the basis of quality of parts of each part type used for generation of each product. Specifically, the initial determination unit 31 generates an order in which parts (part numbers) are arranged in descending order of variations in part quality.

(Initial Order Method 1)

For example, the initial determination unit 31 sets a variation in part quality as an "absolute value of an error from a design value of part quality", and determines an initial order in descending order of the values. FIG. 7 is a diagram for describing generation of the initial order. As illustrated in FIG. 7, when description is made by taking the part A having a design value "$a_{DESIGN}$" as an example, in a case where the quality of the part number A1 is "a1", the initial determination unit 31 calculates an error "a1' = |a1 - $a_{DESIGN}$|" for the part number A1 and calculates an error "a6' = |a6 - $a_{DESIGN}$|" for the part number A6.

Similarly, when description is made by taking the part D having a design value "$d_{DESIGN}$" as an example, in a case where the quality of the part number D3 is"d3", the initial determination unit 31 calculates an error "d3' = |d3 - $d_{DESIGN}$|" for the part number D3 and calculates an error "d7' = |d7 - $d_{DESIGN}$|" for the part number D7. In this way, for each part of each type, the initial determination unit 31 calculates an error from a design value of the part, and standardizes quality of each part.

Thereafter, the initial determination unit 31 rearranges absolute values of the standardized quality of the parts in descending order to generate an initial order. That is, the initial determination unit 31 sorts the absolute values of the quality in descending order in the entire stock of parts. In an example of FIG. 7, it is assumed that a1' > a4' > b7' > ... e5' > b2'.

(Initial Order Method 2)

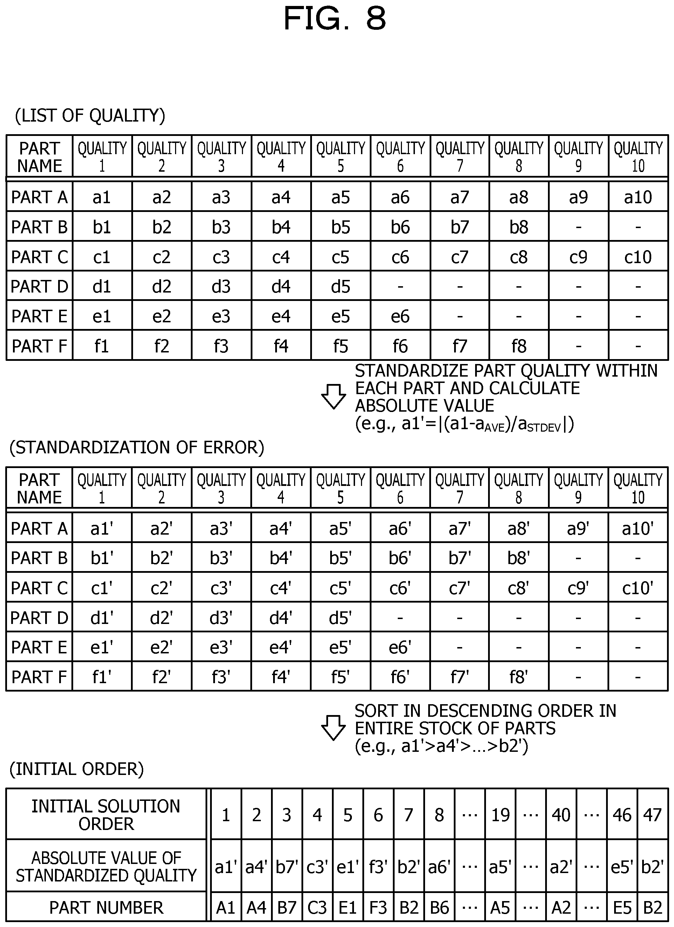

Furthermore, the initial determination unit 31 may set a variation in part quality as an "absolute value of part quality standardized within a part type", and determine an initial order in descending order of the values. FIG. 8 is a diagram for describing another example of the generation of the initial order. As illustrated in FIG. 8, when description is made by taking the part A as an example, the initial determination unit 31 calculates an average value "$a_{AVE}$" of quality of the parts of the part A and a standard deviation "$a_{STDEV}$" of the quality of the parts. Then, in a case where the quality of the part number A1 of the part A is "a1", the initial determination unit 31 calculates a standardization value "a1' = |(a1 - $a_{AVE}$)|/$a_{STDEV}$" for the part number A1, and calculates a standardization value "a6' = |(a6 - $a_{AVE}$)|/$a_{STDEV}$" for the part number A6.

Similarly, when description is made by taking the part E as an example, the initial determination unit 31 calculates an average value "$e_{AVE}$" of quality of the parts of the part E and a standard deviation "$e_{STDEV}$" of the quality of the parts. Then, in a case where the quality of the part number E4 of the part E is "e4", the initial determination unit 31 calculates a standardization value "e4' = |(e4 - $e_{AVE}$)|/$e_{STDEV}$" for the part number E4, and calculates a standardization value "e7' = |(e7 - $e_{AVE}$)|/$e_{STDEV}$" for the part number E7.

Thereafter, the initial determination unit 31 rearranges the standardization values of the quality of the parts in descending order to generate an initial order. That is, the initial determination unit 31 sorts the standardization values of the quality in descending order in the entire stock of parts. In an example of FIG. 8, it is assumed that a1' > a4' > b7' > ... e5' > b2'.

Returning to FIG. 2, the target setting unit 32 is a processing unit that repeatedly executes setting of a predetermined range in which a part whose order is undetermined is at the head while order search is being executed. Specifically, the target setting unit 32 determines a range as a rearrangement target (partial range) and a range as a non-rearrangement target until an order of parts is finally determined, and notifies the partial cutout unit 33 of the ranges.

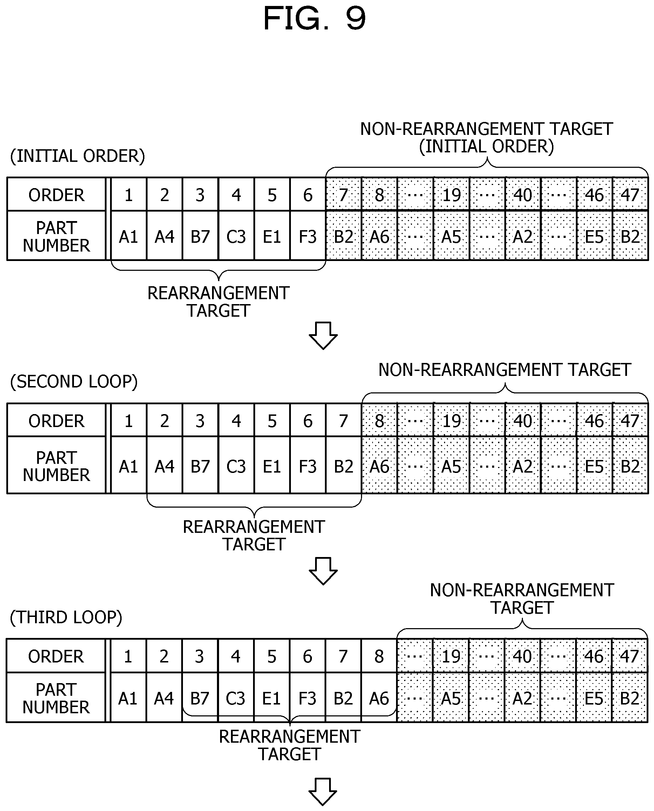

FIG. 9 is a diagram for describing target order setting. As illustrated in FIG. 9, in a first loop of order search, with respect to an initial order, the target setting unit 32 determines six part numbers from the part number "A1" as a head (order 1) to an order 6 ("F3") as a rearrangement target, and determines other part numbers as a non-rearrangement target. Thereafter, in a second loop after the order 1 is determined, the target setting unit 32 determines six part numbers from an order 2 as the next order of the order 1 to an order 7 as a rearrangement target, and determines other part numbers as a non-rearrangement target.

Moreover, in a third loop after the order 2 is determined, the target setting unit 32 determines six part numbers from an order 3 as the next order of the order 2 to an order 8 as a rearrangement target, and determines other part numbers as a non-rearrangement target. In this way, each time an order is determined in order from the head, the target setting unit 32 repeats setting of a rearrangement target by shifting a predetermined range by one with an order next to the determined order at the head.

The partial cutout unit 33 is a processing unit that cuts out part numbers corresponding to each of a rearrangement target and a non-rearrangement target each time the rearrangement target and the non-rearrangement target set by the target setting unit 32 are determined. For example, the partial cutout unit 33 outputs each part number within a range determined as a rearrangement target to the partial replacement unit 34, and outputs each part number within a range determined as a non-rearrangement target to the order combination unit 35.

The partial replacement unit 34 is a processing unit that generates, each time a rearrangement target is notified from the partial cutout unit 33, each pattern in which part numbers as the rearrangement target are rearranged. Here, when quality of each product is calculated, part numbers are allocated to products in an order of appearance in a target order, and at this time, the allocation is performed in an order of appearance for each part type.

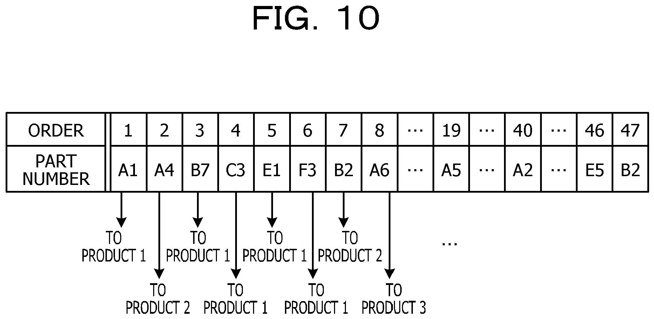

FIG. 10 is a diagram for describing part allocation to a product. As illustrated in FIG. 10, in an order in which parts are arranged, part numbers are allocated to the product 1, the product 2, the product 3, the product 4, and the product 5 in order from the part number having the earlier order of appearance for each part type.

For example, the part number A1 of the order 1 is allocated to the product 1 because it appears earliest in the part type "part A", and the part number A2 of the order 2 is allocated to the product 2 because it appears second in the part type "part A". Furthermore, the part number B7 of the order 3 is allocated to the product 1 because it appears earliest in the part type "part B", and the part number C3 of the order 4 is allocated to the product 1 because it appears earliest in the part type "part C". Furthermore, the part number E1 of the order 5 is allocated to the product 1 because it appears earliest in the part type "part E", and the part number F3 of the order 6 is allocated to the product 1 because it appears earliest in the part type "part F". Furthermore, the part number B2 of the order 7 is allocated to the product 2 because it appears second in the part type "part B", and the part number A6 of the order 8 is allocated to the product 3 because it appears third in the part type "part A".

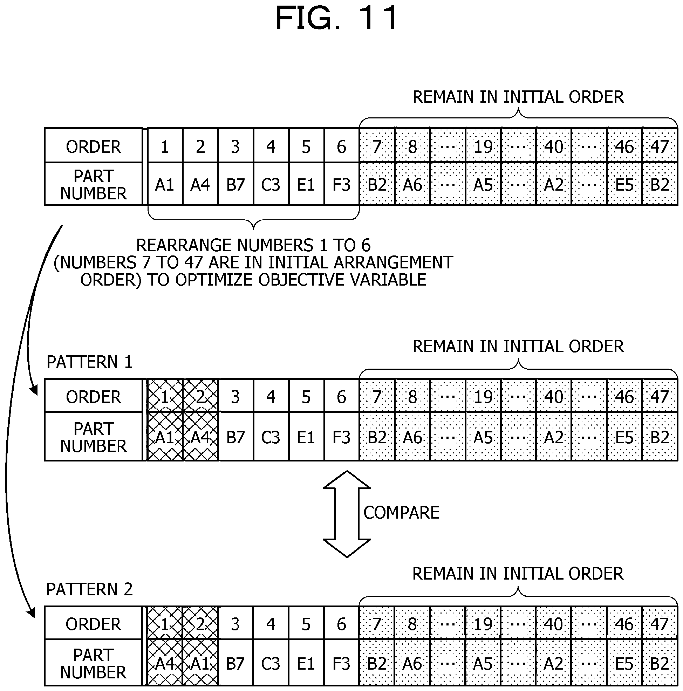

Therefore, the partial replacement unit 34 may shorten a search time by rearranging not all parts within a range as a rearrangement target, but rearranging "parts" having overlapping part types within the range as the rearrangement target. FIG. 11 is a diagram for describing partial replacement. As illustrated in FIG. 11, the partial replacement unit 34 specifies that only the "part A" (A1 and A4) has overlapping part types within a range as a rearrangement target. That is, it is only rearrangement of the A1 and A4 that affects quality of a product.

As a result, the partial replacement unit 34 generates a pattern in which A1 and A4 are replaced. Specifically, the partial replacement unit 34 generates a pattern 1 in which the order 1 is set to A1 and the order 2 is set to A4 and an order of others is not changed, and a pattern 2 in which the order 1 is set to A4 and the order 2 is set to A1 and the order of others is not changed, and generates the pattern 1 and the pattern 2 in the order combination unit 35.

The order combination unit 35 is a processing unit that combines part numbers in each pattern notified from the partial replacement unit 34 and part numbers as a non-rearrangement target notified from the partial cutout unit 33 to generate each order pattern (each state). For example, when description is made by taking a first loop in which an initial order is to be processed as an example, the order combination unit 35 generates an order pattern 1 (state 1) in which the pattern 1 in which the order 1 is set to A1 and the order 2 is set to A4 and the order of others is not changed is set to "the order 1 to the order 6" and is combined with "the order 7 to an order 47" as a non-rearrangement target.

Furthermore, the order combination unit 35 generates an order pattern 2 (state 2) in which the pattern 2 in which the order 1 is set to A4 and the order 2 is set to A1 and the order of others is not changed is set to "the order 1 to the order 6" and is combined with "the order 7 to the order 47" as the non-rearrangement target. Then, the order combination unit 35 outputs the order pattern 1 and the order pattern 2 to the quality calculation unit 36.

The quality calculation unit 36 is a processing unit that calculates, for each order pattern notified from the order combination unit 35, quality of each product by using quality of each product when parts are allocated to each product. Specifically, for each order pattern, the quality calculation unit 36 allocates each part number of the part A to the product 1, the product 2, the product 3, the product 4, and the product 5 in the order of appearance, allocates each part number of the part B to the product 1, the product 2, the product 3, the product 4, and the product 5 in the order of appearance, and allocates each part number of the part C to the product 1, the product 2, the product 3, the product 4, and the product 5 in the order of appearance. Similarly, the quality calculation unit 36 allocates each part number of the part D to the product 1, the product 2, the product 3, the product 4, and the product 5 in the order of appearance, allocates each part number of the part E to the product 1, the product 2, the product 3, the product 4, and the product 5 in the order of appearance, and allocates each part number of the part F to the product 1, the product 2, the product 3, the product 4, and the product 5 in the order of appearance.

Then, for each order pattern, the quality calculation unit 36 calculates quality of each product of the product 1 to the product 6, calculates an evaluation value obtained by totaling the quality of each product, and outputs the evaluation value to the quality evaluation unit 37. For example, the quality calculation unit 36 calculates product quality Q "$Q = q_a + q_b + ...$" from the sum of quality ($q_a$, $q_b$, ...) of each allocated part. Then, the quality calculation unit 36 calculates the product quality Q for each product, and calculates an evaluation value obtained by totaling each product quality Q. Note that various methods may be adopted for calculation of the product quality Q.

For example, in a case where the product quality Q is defined by a linear expression expressed by Expression (1), the quality calculation unit 36 may also calculate the product quality Q by substituting the quality ($q_a$, $q_b$, ...) of each allocated part into Expression (1). Furthermore, in a case where the product quality Q is defined by a quadratic expression expressed by Expression (2), the quality calculation unit 36 may also calculate the product quality Q by substituting the quality ($q_a$, $q_b$, ...) of each allocated part into Expression (1). Furthermore, the quality calculation unit 36 may also calculate the product quality Q by using simulators such as structural analysis, stress analysis, and electromagnetic field analysis, and by using the respective part types A and B and the part quality $q_a$ and $q_b$ as input parameters.

[Expression 1]

$$Q = \alpha_A \cdot q_a + \alpha_B \cdot q_b + \cdots + \beta \qquad \text{... Expression (1)}$$

[Expression 2]

$$Q = \alpha_A \cdot (q_a + \beta_A)^2 + \alpha_B \cdot (q_b + \beta_B)^2 + \cdots + \gamma \quad \text{... Expression (2)}$$

Note that $q_a$ and $q_b$ correspond to a1 and b1 in FIG. 7. Furthermore, $\alpha_A$, $\beta$, and $\gamma$ in Expressions (1) and (2) are predetermined values.

The quality evaluation unit 37 is a processing unit that evaluates each objective variable by using an order of part numbers in each order pattern calculated by the quality calculation unit 36 as an explanatory variable and product quality corresponding to each order pattern as the objective variable. Specifically, the quality evaluation unit 37 selects an order pattern having the largest evaluation value of each order pattern calculated by the quality calculation unit 36 as an optimum solution. For example, the quality evaluation unit 37 outputs an order in the order pattern 2 to the head determination unit 38 in a case where the order pattern 2 (see FIG. 11) in which "the order 1 = A4 and the order 2 = A1" is set and others remain in an initial order is selected.

The head determination unit 38 is a processing unit that determines a head order of an order pattern notified from the quality evaluation unit 37. For example, the head determination unit 38 determines "an order = A1" in a case where the order pattern 2 in which "the order 1 = A4 and the order 2 = A1" is set and others remain in an initial order is notified. Then, the head determination unit 38 notifies the target setting unit 32 that order search (loop processing) for searching for the next head by shifting determination of a rearrangement target is continued. In this way, order search in which rearrangement and determination of a head order are performed is continued until an order of all parts is determined or parts of each product are determined.

On the other hand, in a case where an order of all part numbers is determined, the head determination unit 38 ends the order search, allocates each part to each product according to the order and product quality at that time, and generates the optimization result 17. Note that the head determination unit 38 may end the order search in a case where the allocation to each product is completed before the order of all the part numbers is determined.

[Specific Examples]

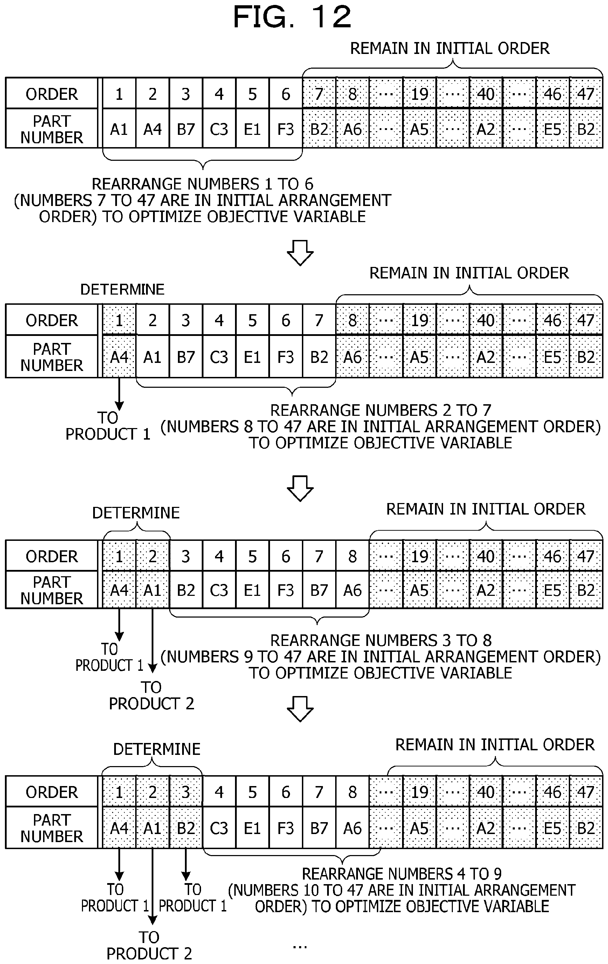

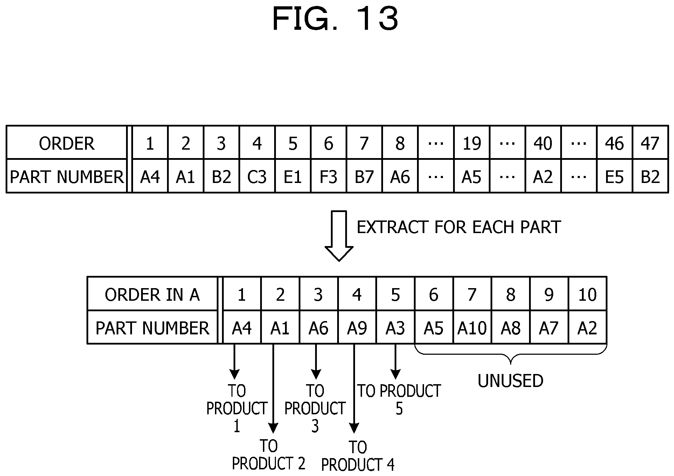

Here, an example of searching for an optimum solution for part allocation for each product will be described with reference to FIGs. 12 and 13. FIG. 12 is a diagram for describing a specific example of searching for an optimum solution. FIG. 13 is a diagram for describing product allocation after the optimum solution is determined.

As illustrated in FIG. 12, in an initial order, the search unit 30 sets "the order 1 to the order 6" as a rearrangement target and sets "the order 7 to the order 47" as a non-rearrangement target, and generates each order pattern in which part numbers of "the order 1 to the order 6" as the rearrangement target are rearranged. Then, the search unit 30 specifies an order pattern having the highest evaluation value of each order pattern, and determines "the order 1 = A4" which is a head order of the order pattern.

Next, in undetermined orders, the search unit 30 sets six orders from "the order 2" as a head to "the order 7" as a rearrangement target and sets "the order 8 to the order 47" as a non-rearrangement target, and generates each order pattern in which part numbers of "the order 2 to the order 7" as the rearrangement target are rearranged. Then, the search unit 30 specifies an order pattern having the highest evaluation value of each order pattern, and determines "the order 2 = A1" which is a head order of the order pattern.

Next, in undetermined orders, the search unit 30 sets six orders from "the order 3" as a head to "the order 8" as a rearrangement target and sets "the order 9 to the order 47" as a non-rearrangement target, and generates each order pattern in which part numbers of "the order 3 to the order 8" as the rearrangement target are rearranged. Then, the search unit 30 specifies an order pattern having the highest evaluation value of each order pattern, and determines "the order 3 = B2" which is a head order of the order pattern.

Next, in undetermined orders, the search unit 30 sets first six orders from "the order 4" as a head to "the order 9" as a rearrangement target and sets "the order 10 to the order 47" as a non-rearrangement target, generates each order pattern in which part numbers of "the order 4 to the order 9" as the rearrangement target are rearranged, and determines the head order. In this way, the search unit 30 sequentially determines a head order while limiting a rearrangement target.

In this way, a state where an order is finally determined is illustrated in FIG. 13. As illustrated in FIG. 13, it is assumed that the part numbers "A4, A1, B2, ..., E5, and B2" are finally determined as the order "the order 1, the order 2, the order 3, ..., the order 46, and the order 47". Then, the search unit 30 takes out the part number for each part type and associates the part number with each part.

For example, the search unit 30 takes out each part number of the part A, acquires the order "A4, A1, A6, A9, A3, A5, A10, A8, A7, and A2" in the part A, and allocates A4 to the product 1, A1 to the product 2, A6 to the product 3, A9 to the product 4, and A3 to the product 5 in order from the head. At this time, "A10, A8, A7, and A2" are unused parts.

In this way, the search unit 30 executes part allocation to a product in an order of appearance of a determined order for each of the parts A, B, C, D, E, and F, and implements optimization of the part allocation.

[Flow of Processing]

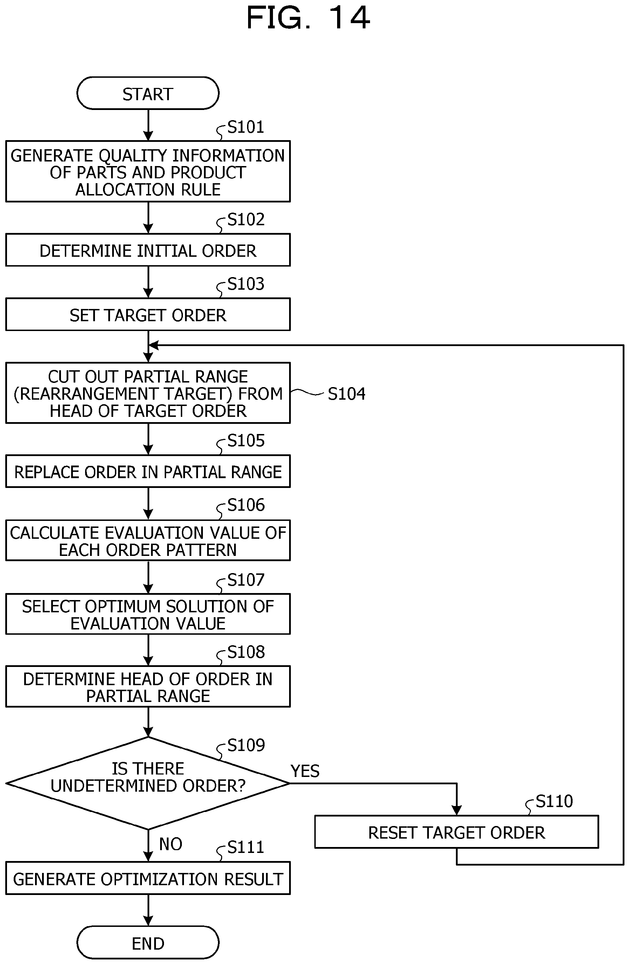

FIG. 14 is a flowchart illustrating a flow of search processing. As illustrated in FIG. 14, when the processing is started, the initialization unit 21 generates the quality information 16 of parts and the product allocation rule 14 (S101).
Subsequently, the search unit 30 determines an initial order (S102), and sets a target order including a rearrangement target and a non-rearrangement target (S103). Then, the search unit 30 cuts out a partial range (rearrangement target) from a head of the target order (S104), generates each order pattern in which an order in the partial range is replaced (S105), and calculates an evaluation value of each order pattern (S106).
Thereafter, the search unit 30 selects an optimum solution of the evaluation value of each order pattern (S107), and determines a head of the order in the partial range (rearrangement target) (S108).
Then, in a case where there is an undetermined order (S109: Yes), the search unit 30 executes resetting of the target order (S110), and executes S104 and subsequent steps. On the other hand, in a case where there is no undetermined order (S109: No), the search unit 30 ends optimization of allocation of each part and generates an optimization result (S111).

[Effects]

As described above, since the information processing apparatus 10 limits search to a predetermined area until optimization is searched for from an initial order, and determines an order in order from a head, it is possible to search for optimization by reducing a scale of a problem. As a result, the information processing apparatus 10 may search for a good solution in a short time for a problem having an enormous solution space (total number of combinations) and allocate parts to each product. Furthermore, since the information processing apparatus 10 determines the initial order in descending order of part quality, the order may be determined from parts having a large influence on quality of a product, so that solution search capability may be enhanced rather than starting the search in random order.

[Second Embodiment]

Incidentally, while the embodiment of the present invention has been described above, the present invention may be implemented in various different modes in addition to the embodiment described above.

[Numerical Values and the like]

The numerical value examples, the range as a rearrangement target, the number of parts, the number of products, the quality values, the evaluation values, the functions, and the like used in the embodiment described above are merely examples, and may be optionally changed.

[Rearrangement Target]

In the embodiment described above, the example has been described in which, as a result of rearrangement within a range as a rearrangement target, only a part at a head of the rearrangement target is determined, but the present invention is not limited to this. For example, an order may be determined for each range as a rearrangement target.

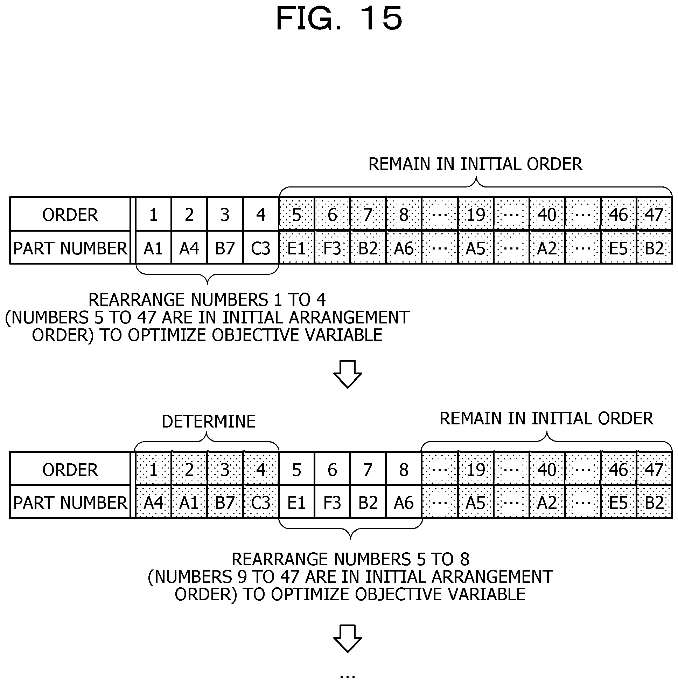

FIG. 15 is a diagram for describing another example of searching for an optimum solution. As illustrated in FIG. 15, a search unit 30 sets an order 1 to an order 4 as a rearrangement target and an order 5 to an order 47 as a non-rearrangement target, and generates each order pattern in which the order 1 to the order 4 are rearranged. Subsequently, the search unit 30 generates an evaluation value of each order pattern, and specifies an order pattern having the highest evaluation value. Then, the search unit 30 determines the order 1 to the order 4 in the order in the order pattern having the highest evaluation value.
Thereafter, the search unit 30 sets the order 5 to the order 8 with the order 5 whose order is undetermined at a head as a rearrangement target and the order 9 to the order 47 as a non-rearrangement target. Then, the search unit 30 calculates an evaluation value of each order pattern in which the order 5 to the order 8 are rearranged, and determines the order 5 to the order 8 in the order in the order pattern having the highest evaluation value. In this way, since the search unit 30 may determine an order for each range as a rearrangement target, it is possible to shorten a time taken for search as compared with the first embodiment.

[Utilization of Annealing Computer]

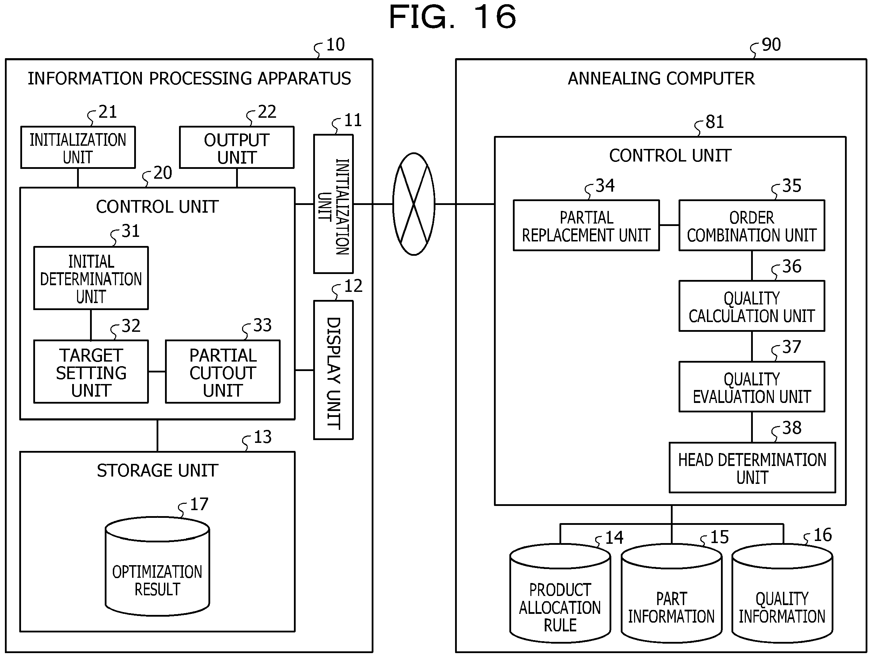

For example, optimization may be speeded up by executing search processing by an Ising machine or an annealing computer. FIG. 16 is a diagram for describing an example of utilization of the annealing computer. As illustrated in FIG. 16, an information processing apparatus 10 and an annealing computer 90 are connected by various networks. In such a configuration, the information processing apparatus 10 includes an initial determination unit 31, a target setting unit 32, and a partial cutout unit 33, and the annealing computer 90 includes a partial replacement unit 34, an order combination unit 35, a quality calculation unit 36, a quality evaluation unit 37, and a head determination unit 38.

That is, the information processing apparatus 10 has a function of executing setting of a rearrangement target, and the annealing computer 90 has a function of executing rearrangement of parts and examination of an evaluation value, so that processing is shared and optimization may be speeded up. Note that, in a case where an objective variable (evaluation function), which is a total value of quality of each product, may be expressed by a quadratic expression of an explanatory variable (input variable), optimization of a combination of parts may be particularly speeded up by utilizing the annealing computer. Note that the functional units arranged in the annealing computer 90 and the information processing apparatus 10 are examples, and may be optionally changed.

[System]

Pieces of information including a processing procedure, a control procedure, a specific name, various types of data, and parameters described above or illustrated in the drawings may be optionally changed unless otherwise specified. Note that the initial determination unit 31 is an example of a generation unit, and the search unit 30 is an example of a search unit.

Furthermore, each component of each device illustrated in the drawings is functionally conceptual, and does not necessarily have to be physically configured as illustrated in the drawings. In other words, specific forms of distribution and integration of individual devices are not limited to those illustrated in the drawings. That is, all or a part thereof may be configured by being functionally or physically distributed or integrated in optional units according to various types of loads, usage situations, or the like.

Moreover, all or an optional part of individual processing functions performed in each device may be implemented by a CPU and a program analyzed and executed by the CPU, or may be implemented as hardware by wired logic.

[Hardware]

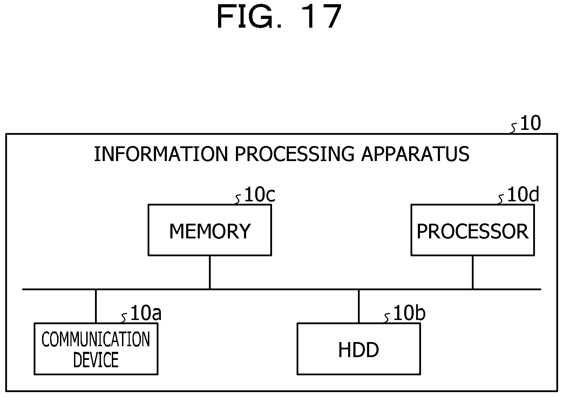

Next, a hardware configuration example of the information processing apparatus 10 will be described. FIG. 17 is a diagram for describing the hardware configuration example. As illustrated in FIG. 17, the information processing apparatus 10 includes a communication device 10a, a hard disk drive (HDD) 10b, a memory 10c, and a processor 10d. Furthermore, the individual units illustrated in FIG. 16 are mutually connected by a bus or the like.

The communication device 10a is a network interface card or the like, and communicates with another server. The HDD 10b stores programs and DBs for operating the functions illustrated in FIG. 2.

The processor 10d reads a program that executes processing similar to the processing of each processing unit illustrated in FIG. 2 from the HDD 10b or the like, and develops the read program in the memory 10c, thereby operating a process that executes each function described with reference to FIG. 2 or the like. For example, the process executes a function similar to the function of each processing unit included in the information processing apparatus 10. Specifically, the processor 10d reads a program having a function similar to the function of the initialization unit 21, the output unit 22, the search unit 30, or the like from the HDD 10b or the like. Then, the processor 10d executes a process that executes processing similar to the processing of the initialization unit 21, the output unit 22, the search unit 30, or the like.

In this way, the information processing apparatus 10 operates as an information processing apparatus that executes a search method by reading and executing a program. Furthermore, the information processing apparatus 10 may implement functions similar to the functions of the embodiments described above by reading the program described above from a recording medium by a medium reading device and executing the read program described above. Note that the program referred to in another embodiment is not limited to being executed by the information processing apparatus 10. For example, the present invention may be similarly applied to a case where another computer or server executes the program, or a case where such a computer and server cooperatively execute the program.

REFERENCE SIGNS LIST

    10 Information processing apparatus

11 Communication unit
12 Display unit
13 Storage unit
14 Product allocation rule
15 Part information
16 Quality information
17 Optimization result
20 Control unit
21 Initialization unit
22 Output unit
30 Search unit
31 Initial determination unit
32 Target setting unit
33 Partial cutout unit
34 Partial replacement unit
35 Order combination unit
36 Quality calculation unit
37 Quality evaluation unit
38 Head determination unit

**Claims**

1. An information processing apparatus comprising:

   a generation unit that generates, in a case where a plurality of products is manufactured by using a plurality of parts classified into a plurality of part types, an initial order in which the plurality of parts is arranged in order on the basis of part quality, for each of the plurality of part types; and
   a search unit that searches for a first order of the plurality of parts in which product quality of each of the plurality of products becomes optimum by executing processing of determining an order of the parts in the initial order after changing the order in a predetermined range as a part of the initial order, while sequentially changing a position of the predetermined range in the initial order, wherein
   the search unit
   sets the predetermined range in which a part whose order is undetermined within the initial order is at a head, generates a plurality of states in which the order of the plurality of parts within the predetermined range is different from each other,
   allocates, for each of the plurality of states, the plurality of parts included in the predetermined range to the plurality of products for each of the plurality of part types in order from the head of the predetermined range,
   calculates, for each of the plurality of states, the product quality of each of the plurality of products to which the plurality of parts is allocated, and
   repeats order search that determines the order of at least a part of the parts in the predetermined range on the basis of the product quality calculated for each of the plurality of states, while changing the position of the predetermined range in the initial order each time the order within the predetermined range is determined.

2. The information processing apparatus according to claim 1, wherein the search unit repeatedly executes the order search by specifying a state with the best quality in the product quality calculated for each of the plurality of states, determining the order for a part at the head within the predetermined range in the specified state, and sequentially setting the next predetermined range from a part next to the part at the head whose order is determined.

3. The information processing apparatus according to claim 2, wherein the search unit repeatedly executes the order search until the order of all parts of the plurality of parts is determined, or until allocation of the plurality of parts to each of the plurality of products is determined.

4. The information processing apparatus according to claim 1, wherein the generation unit generates the initial order in which the plurality of parts is arranged for each of the plurality of part types in descending order of variations in the part quality, and
   the search unit repeatedly executes the order search to determine the order in order from a part that has the largest variation in the part quality.

5. The information processing apparatus according to claim 4, wherein the generation unit generates the initial order in which the plurality of parts is arranged for each of the plurality of part types in descending order of absolute values of errors from a design value of the part quality with respect to each of the plurality of parts.

6. The information processing apparatus according to claim 4, wherein the generation unit generates, for each of the plurality of part types, the initial order in which the plurality of parts is arranged for each of the plurality of part types in descending order of absolute values of the part quality that has been standardized.

7. An search method for a computer to execute a process comprising:

   generating, in a case where a plurality of products is manufactured by using a plurality of parts classified into a plurality of part types, an initial order in which the plurality of parts is arranged in order on the basis of part quality, for each of the plurality of part types; and
   searching for a first order of the plurality of parts in which product quality of each of the plurality of products becomes optimum by executing processing of determining an order of the parts in the initial order after changing the order in a predetermined range as a part of the initial order, while sequentially changing a position of the predetermined range in the initial order, wherein
   the searching includes:

      setting the predetermined range in which a part whose order is undetermined within the initial order is at a head;
      generating a plurality of states in which the order of the plurality of parts within the predetermined range is different from each other;
      allocating, for each of the plurality of states, the plurality of parts included in the predetermined range to the plurality of products for each of the plurality of part types in order from the head of the predetermined range;
      calculating, for each of the plurality of states, the product quality of each of the plurality of products to which the plurality of parts is allocated; and
      repeating order search that determines the order of at least a part of the parts in the predetermined range on the basis of the product quality calculated for each of the plurality of states, while changing the position of the predetermined range in the initial order each time the order within the predetermined range is determined.

8. A search program that causes a computer to execute a process, the process comprising:

   generating, in a case where a plurality of products is manufactured by using a plurality of parts classified into a plurality of part types, an initial order in which the plurality of parts is arranged in order on the basis of part quality, for each of the plurality of part types; and
   searching for a first order of the plurality of parts in which product quality of each of the plurality of products becomes optimum by executing processing of determining an order of the parts in the initial order after changing the order in a predetermined range as a part of the initial order, while sequentially changing a position of the predetermined range in the initial order, wherein
   the searching includes:

      setting the predetermined range in which a part whose order is undetermined within the initial order is at a head;
      generating a plurality of states in which the order of the plurality of parts within the predetermined range is different from each other;
      allocating, for each of the plurality of states, the plurality of parts included in the predetermined range to the plurality of products for each of the plurality of part types in order from the head of the predetermined range;
      calculating, for each of the plurality of states, the product quality of each of the plurality of products to which the plurality of parts is allocated; and
      repeating order search that determines the order of at least a part of the parts in the predetermined range on the basis of the product quality calculated for each of the plurality of states, while changing the position of the predetermined range in the initial order each time the order within the predetermined range is determined.

# FIG. 1

PRODUCT ALLOCATION RULE

PART INFORMATION

~10

INFORMATION PROCESSING APPARATUS

OPTIMIZATION OF COMBINATION OF PARTS OF EACH PRODUCT

# FIG. 2

INFORMATION PROCESSING APPARATUS ⌇10

CONTROL UNIT ⌇20

INITIALIZATION UNIT ⌇21

OUTPUT UNIT ⌇22

SEARCH UNIT ⌇30

INITIAL DETERMINATION UNIT ⌇31

TARGET SETTING UNIT ⌇32

PARTIAL CUTOUT UNIT ⌇33

PARTIAL REPLACEMENT UNIT ⌇34

ORDER COMBINATION UNIT ⌇35

QUALITY CALCULATION UNIT ⌇36

QUALITY EVALUATION UNIT ⌇37

HEAD DETERMINATION UNIT ⌇38

COMMUNICATION UNIT ⌇11

DISPLAY UNIT ⌇12

STORAGE UNIT ⌇13

PRODUCT ALLOCATION RULE ⌇14

PART INFORMATION ⌇15

QUALITY INFORMATION ⌇16

OPTIMIZATION RESULT ⌇17

# FIG. 3

| PRODUCT NAME | PRODUCT 1 | PRODUCT 2 | PRODUCT 3 | PRODUCT 4 | PRODUCT 5 |
|---|---|---|---|---|---|
| PART NAME | PART A | | | | |
| | PART B | | | | |
| | PART C | | | | |
| | PART D | | | | |
| | PART E | | | | |
| | PART F | | | | |

# FIG. 4

| PART NAME | PART NUMBER | | | | | | | | | | THE NUMBER OF PIECES OF STOCK |
|---|---|---|---|---|---|---|---|---|---|---|---|
| PART A | A1 | A2 | A3 | A4 | A5 | A6 | A7 | A8 | A9 | A10 | 10 |
| PART B | B1 | B2 | B3 | B4 | B5 | B6 | B7 | B8 | - | - | 8 |
| PART C | C1 | C2 | C3 | C4 | C5 | C6 | C7 | C8 | C9 | C10 | 10 |
| PART D | D1 | D2 | D3 | D4 | D5 | - | - | - | - | - | 5 |
| PART E | E1 | E2 | E3 | E4 | E5 | E6 | - | - | - | - | 6 |
| PART F | F1 | F2 | F3 | F4 | F5 | F6 | F7 | F8 | - | - | 8 |

EP 4 123 459 A1

# FIG. 5

| PART NAME | PART NUMBER | | | | | | | | | |
|---|---|---|---|---|---|---|---|---|---|---|
| | QUALITY | | | | | | | | | |
| PART A | A1 | A2 | A3 | A4 | A5 | A6 | A7 | A8 | A9 | A10 |
| | a1 | a2 | a3 | a4 | a5 | a6 | a7 | a8 | a9 | a10 |
| PART B | B1 | B2 | B3 | B4 | B5 | B6 | B7 | B8 | - | - |
| | b1 | b2 | b3 | b4 | b5 | b6 | b7 | b8 | - | - |
| PART C | C1 | C2 | C3 | C4 | C5 | C6 | C7 | C8 | C9 | C10 |
| | c1 | c2 | c3 | c4 | c5 | c6 | c7 | c8 | c9 | c10 |
| PART D | D1 | D2 | D3 | D4 | D5 | - | - | - | - | - |
| | d1 | d2 | d3 | d4 | d5 | - | - | - | - | - |
| PART E | E1 | E2 | E3 | E4 | E5 | E6 | - | - | - | - |
| | e1 | e2 | e3 | e4 | e5 | e6 | - | - | - | - |
| PART F | F1 | F2 | F3 | F4 | F5 | F6 | F7 | F8 | - | - |
| | f1 | f2 | f3 | f4 | f5 | f6 | f7 | f8 | - | - |

# FIG. 6

| | PRODUCT 1 | PRODUCT 2 | PRODUCT 3 | PRODUCT 4 | PRODUCT 5 | UNUSED | | | | |
|---|---|---|---|---|---|---|---|---|---|---|
| PART NUMBER OF A | A5 | A2 | A4 | A9 | A6 | A3 | A1 | A10 | A7 | A8 |
| PART NUMBER OF B | B1 | B2 | B8 | B7 | B5 | B6 | B4 | B3 | - | - |
| PART NUMBER OF C | C10 | C1 | C3 | C5 | C2 | C8 | C7 | C9 | C4 | C6 |
| PART NUMBER OF D | D4 | D1 | D3 | D2 | D5 | - | - | - | - | - |
| PART NUMBER OF E | E2 | E6 | E1 | E3 | E4 | E5 | - | - | - | - |
| PART NUMBER OF F | F5 | F4 | F8 | F2 | F1 | F3 | F6 | F7 | - | - |
| PRODUCT QUALITY | q1 | q2 | q3 | q4 | q5 | | | | | |

# FIG. 7

(LIST OF QUALITY)

| PART NAME | QUALITY 1 | QUALITY 2 | QUALITY 3 | QUALITY 4 | QUALITY 5 | QUALITY 6 | QUALITY 7 | QUALITY 8 | QUALITY 9 | QUALITY 10 |
|---|---|---|---|---|---|---|---|---|---|---|
| PART A | a1 | a2 | a3 | a4 | a5 | a6 | a7 | a8 | a9 | a10 |
| PART B | b1 | b2 | b3 | b4 | b5 | b6 | b7 | b8 | - | - |
| PART C | c1 | c2 | c3 | c4 | c5 | c6 | c7 | c8 | c9 | c10 |
| PART D | d1 | d2 | d3 | d4 | d5 | - | - | - | - | - |
| PART E | e1 | e2 | e3 | e4 | e5 | e6 | - | - | - | - |
| PART F | f1 | f2 | f3 | f4 | f5 | f6 | f7 | f8 | - | - |

⇩ CALCULATE ABSOLUTE VALUE OF ERROR FROM DESIGN VALUE OF PART QUALITY
(e.g., $a1'=|a1-a_{DESIGN}|$)

(LIST OF ABSOLUTE VALUES OF ERRORS)

| PART NAME | QUALITY 1 | QUALITY 2 | QUALITY 3 | QUALITY 4 | QUALITY 5 | QUALITY 6 | QUALITY 7 | QUALITY 8 | QUALITY 9 | QUALITY 10 |
|---|---|---|---|---|---|---|---|---|---|---|
| PART A | a1' | a2' | a3' | a4' | a5' | a6' | a7' | a8' | a9' | a10' |
| PART B | b1' | b2' | b3' | b4' | b5' | b6' | b7' | b8' | - | - |
| PART C | c1' | c2' | c3' | c4' | c5' | c6' | c7' | c8' | c9' | c10' |
| PART D | d1' | d2' | d3' | d4' | d5' | - | - | - | - | - |
| PART E | e1' | e2' | e3' | e4' | e5' | e6' | - | - | - | - |
| PART F | f1' | f2' | f3' | f4' | f5' | f6' | f7' | f8' | - | - |

⇩ SORT IN DESCENDING ORDER IN ENTIRE STOCK OF PARTS
(e.g., a1'>a4'>...>b2')

(INITIAL ORDER)

| INITIAL SOLUTION ORDER | 1 | 2 | 3 | 4 | 5 | 6 | 7 | 8 | ⋯ | 19 | ⋯ | 40 | ⋯ | 46 | 47 |
|---|---|---|---|---|---|---|---|---|---|---|---|---|---|---|---|
| ABSOLUTE VALUE OF STANDARDIZED QUALITY | a1' | a4' | b7' | c3' | e1' | f3' | b2' | a6' | ⋯ | a5' | ⋯ | a2' | ⋯ | e5' | b2' |
| PART NUMBER | A1 | A4 | B7 | C3 | E1 | F3 | B2 | B6 | ⋯ | A5 | ⋯ | A2 | ⋯ | E5 | B2 |

# FIG. 8

(LIST OF QUALITY)

| PART NAME | QUALITY 1 | QUALITY 2 | QUALITY 3 | QUALITY 4 | QUALITY 5 | QUALITY 6 | QUALITY 7 | QUALITY 8 | QUALITY 9 | QUALITY 10 |
|---|---|---|---|---|---|---|---|---|---|---|
| PART A | a1 | a2 | a3 | a4 | a5 | a6 | a7 | a8 | a9 | a10 |
| PART B | b1 | b2 | b3 | b4 | b5 | b6 | b7 | b8 | - | - |
| PART C | c1 | c2 | c3 | c4 | c5 | c6 | c7 | c8 | c9 | c10 |
| PART D | d1 | d2 | d3 | d4 | d5 | - | - | - | - | - |
| PART E | e1 | e2 | e3 | e4 | e5 | e6 | - | - | - | - |
| PART F | f1 | f2 | f3 | f4 | f5 | f6 | f7 | f8 | - | - |

⇩ STANDARDIZE PART QUALITY WITHIN EACH PART AND CALCULATE ABSOLUTE VALUE
(e.g., $a1' = |(a1 - a_{AVE})/a_{STDEV}|$)

(STANDARDIZATION OF ERROR)

| PART NAME | QUALITY 1 | QUALITY 2 | QUALITY 3 | QUALITY 4 | QUALITY 5 | QUALITY 6 | QUALITY 7 | QUALITY 8 | QUALITY 9 | QUALITY 10 |
|---|---|---|---|---|---|---|---|---|---|---|
| PART A | a1' | a2' | a3' | a4' | a5' | a6' | a7' | a8' | a9' | a10' |
| PART B | b1' | b2' | b3' | b4' | b5' | b6' | b7' | b8' | - | - |
| PART C | c1' | c2' | c3' | c4' | c5' | c6' | c7' | c8' | c9' | c10' |
| PART D | d1' | d2' | d3' | d4' | d5' | - | - | - | - | - |
| PART E | e1' | e2' | e3' | e4' | e5' | e6' | - | - | - | - |
| PART F | f1' | f2' | f3' | f4' | f5' | f6' | f7' | f8' | - | - |

⇩ SORT IN DESCENDING ORDER IN ENTIRE STOCK OF PARTS
(e.g., $a1' > a4' > ... > b2'$)

(INITIAL ORDER)

| INITIAL SOLUTION ORDER | 1 | 2 | 3 | 4 | 5 | 6 | 7 | 8 | ⋯ | 19 | ⋯ | 40 | ⋯ | 46 | 47 |
|---|---|---|---|---|---|---|---|---|---|---|---|---|---|---|---|
| ABSOLUTE VALUE OF STANDARDIZED QUALITY | a1' | a4' | b7' | c3' | e1' | f3' | b2' | a6' | ⋯ | a5' | ⋯ | a2' | ⋯ | e5' | b2' |
| PART NUMBER | A1 | A4 | B7 | C3 | E1 | F3 | B2 | B6 | ⋯ | A5 | ⋯ | A2 | ⋯ | E5 | B2 |

# FIG. 9

(INITIAL ORDER)

NON-REARRANGEMENT TARGET
(INITIAL ORDER)

| ORDER | 1 | 2 | 3 | 4 | 5 | 6 | 7 | 8 | ⋯ | 19 | ⋯ | 40 | ⋯ | 46 | 47 |
|---|---|---|---|---|---|---|---|---|---|---|---|---|---|---|---|
| PART NUMBER | A1 | A4 | B7 | C3 | E1 | F3 | B2 | A6 | ⋯ | A5 | ⋯ | A2 | ⋯ | E5 | B2 |

REARRANGEMENT
TARGET

⇩

(SECOND LOOP)

NON-REARRANGEMENT TARGET

| ORDER | 1 | 2 | 3 | 4 | 5 | 6 | 7 | 8 | ⋯ | 19 | ⋯ | 40 | ⋯ | 46 | 47 |
|---|---|---|---|---|---|---|---|---|---|---|---|---|---|---|---|
| PART NUMBER | A1 | A4 | B7 | C3 | E1 | F3 | B2 | A6 | ⋯ | A5 | ⋯ | A2 | ⋯ | E5 | B2 |

REARRANGEMENT
TARGET

⇩

(THIRD LOOP)

NON-REARRANGEMENT
TARGET

| ORDER | 1 | 2 | 3 | 4 | 5 | 6 | 7 | 8 | ⋯ | 19 | ⋯ | 40 | ⋯ | 46 | 47 |
|---|---|---|---|---|---|---|---|---|---|---|---|---|---|---|---|
| PART NUMBER | A1 | A4 | B7 | C3 | E1 | F3 | B2 | A6 | ⋯ | A5 | ⋯ | A2 | ⋯ | E5 | B2 |

REARRANGEMENT
TARGET

⇩

# FIG. 10

| ORDER | 1 | 2 | 3 | 4 | 5 | 6 | 7 | 8 | ··· | 19 | ··· | 40 | ··· | 46 | 47 |
|---|---|---|---|---|---|---|---|---|---|---|---|---|---|---|---|
| PART NUMBER | A1 | A4 | B7 | C3 | E1 | F3 | B2 | A6 | ··· | A5 | ··· | A2 | ··· | E5 | B2 |

TO PRODUCT 1

TO PRODUCT 1

TO PRODUCT 1

TO PRODUCT 2

···

TO PRODUCT 2

TO PRODUCT 1

TO PRODUCT 1

TO PRODUCT 3

# FIG. 11

REMAIN IN INITIAL ORDER

| ORDER | 1 | 2 | 3 | 4 | 5 | 6 | 7 | 8 | ⋯ | 19 | ⋯ | 40 | ⋯ | 46 | 47 |
|---|---|---|---|---|---|---|---|---|---|---|---|---|---|---|---|
| PART NUMBER | A1 | A4 | B7 | C3 | E1 | F3 | B2 | A6 | ⋯ | A5 | ⋯ | A2 | ⋯ | E5 | B2 |

REARRANGE NUMBERS 1 TO 6
(NUMBERS 7 TO 47 ARE IN INITIAL ARRANGEMENT
ORDER) TO OPTIMIZE OBJECTIVE VARIABLE

REMAIN IN INITIAL ORDER

PATTERN 1

| ORDER | 1 | 2 | 3 | 4 | 5 | 6 | 7 | 8 | ⋯ | 19 | ⋯ | 40 | ⋯ | 46 | 47 |
|---|---|---|---|---|---|---|---|---|---|---|---|---|---|---|---|
| PART NUMBER | A1 | A4 | B7 | C3 | E1 | F3 | B2 | A6 | ⋯ | A5 | ⋯ | A2 | ⋯ | E5 | B2 |

COMPARE

REMAIN IN INITIAL ORDER

PATTERN 2

| ORDER | 1 | 2 | 3 | 4 | 5 | 6 | 7 | 8 | ⋯ | 19 | ⋯ | 40 | ⋯ | 46 | 47 |
|---|---|---|---|---|---|---|---|---|---|---|---|---|---|---|---|
| PART NUMBER | A4 | A1 | B7 | C3 | E1 | F3 | B2 | A6 | ⋯ | A5 | ⋯ | A2 | ⋯ | E5 | B2 |

# FIG. 12

REMAIN IN INITIAL ORDER

| ORDER | 1 | 2 | 3 | 4 | 5 | 6 | 7 | 8 | ⋯ | 19 | ⋯ | 40 | ⋯ | 46 | 47 |
|---|---|---|---|---|---|---|---|---|---|---|---|---|---|---|---|
| PART NUMBER | A1 | A4 | B7 | C3 | E1 | F3 | B2 | A6 | ⋯ | A5 | ⋯ | A2 | ⋯ | E5 | B2 |

REARRANGE NUMBERS 1 TO 6
(NUMBERS 7 TO 47 ARE IN INITIAL ARRANGEMENT
ORDER) TO OPTIMIZE OBJECTIVE VARIABLE

⇩

DETERMINE                    REMAIN IN INITIAL ORDER

| ORDER | 1 | 2 | 3 | 4 | 5 | 6 | 7 | 8 | ⋯ | 19 | ⋯ | 40 | ⋯ | 46 | 47 |
|---|---|---|---|---|---|---|---|---|---|---|---|---|---|---|---|
| PART NUMBER | A4 | A1 | B7 | C3 | E1 | F3 | B2 | A6 | ⋯ | A5 | ⋯ | A2 | ⋯ | E5 | B2 |

TO PRODUCT 1

REARRANGE NUMBERS 2 TO 7
(NUMBERS 8 TO 47 ARE IN INITIAL ARRANGEMENT ORDER)
TO OPTIMIZE OBJECTIVE VARIABLE

⇩

DETERMINE                    REMAIN IN INITIAL ORDER

| ORDER | 1 | 2 | 3 | 4 | 5 | 6 | 7 | 8 | ⋯ | 19 | ⋯ | 40 | ⋯ | 46 | 47 |
|---|---|---|---|---|---|---|---|---|---|---|---|---|---|---|---|
| PART NUMBER | A4 | A1 | B2 | C3 | E1 | F3 | B7 | A6 | ⋯ | A5 | ⋯ | A2 | ⋯ | E5 | B2 |

TO PRODUCT 1
TO PRODUCT 2

REARRANGE NUMBERS 3 TO 8
(NUMBERS 9 TO 47 ARE IN INITIAL ARRANGEMENT ORDER)
TO OPTIMIZE OBJECTIVE VARIABLE

⇩

DETERMINE                    REMAIN IN INITIAL ORDER

| ORDER | 1 | 2 | 3 | 4 | 5 | 6 | 7 | 8 | ⋯ | 19 | ⋯ | 40 | ⋯ | 46 | 47 |
|---|---|---|---|---|---|---|---|---|---|---|---|---|---|---|---|
| PART NUMBER | A4 | A1 | B2 | C3 | E1 | F3 | B7 | A6 | ⋯ | A5 | ⋯ | A2 | ⋯ | E5 | B2 |

TO PRODUCT 1    TO PRODUCT 1
TO PRODUCT 2

REARRANGE NUMBERS 4 TO 9
(NUMBERS 10 TO 47 ARE IN INITIAL ARRANGEMENT
ORDER) TO OPTIMIZE OBJECTIVE VARIABLE

⋯

# FIG. 13

| ORDER | 1 | 2 | 3 | 4 | 5 | 6 | 7 | 8 | ··· | 19 | ··· | 40 | ··· | 46 | 47 |
|---|---|---|---|---|---|---|---|---|---|---|---|---|---|---|---|
| PART NUMBER | A4 | A1 | B2 | C3 | E1 | F3 | B7 | A6 | ··· | A5 | ··· | A2 | ··· | E5 | B2 |

EXTRACT FOR EACH PART

| ORDER IN A | 1 | 2 | 3 | 4 | 5 | 6 | 7 | 8 | 9 | 10 |
|---|---|---|---|---|---|---|---|---|---|---|
| PART NUMBER | A4 | A1 | A6 | A9 | A3 | A5 | A10 | A8 | A7 | A2 |

TO PRODUCT 1
TO PRODUCT 2
TO PRODUCT 3
TO PRODUCT 4
TO PRODUCT 5

UNUSED

# FIG. 14

START

↓ S101

GENERATE QUALITY INFORMATION
OF PARTS AND PRODUCT
ALLOCATION RULE

↓ S102

DETERMINE INITIAL ORDER

↓ S103

SET TARGET ORDER

↓

CUT OUT PARTIAL RANGE
(REARRANGEMENT TARGET) FROM ～ S104
HEAD OF TARGET ORDER

↓ S105

REPLACE ORDER IN PARTIAL RANGE

↓ S106

CALCULATE EVALUATION VALUE OF
EACH ORDER PATTERN

↓ S107

SELECT OPTIMUM SOLUTION OF
EVALUATION VALUE

↓ S108

DETERMINE HEAD OF ORDER IN
PARTIAL RANGE

↓ S109

IS THERE
UNDETERMINED ORDER?  —— YES ——→  RESET TARGET ORDER  S110

NO ↓ S111

GENERATE OPTIMIZATION RESULT

↓

END

# FIG. 15

REMAIN IN INITIAL ORDER

| ORDER | 1 | 2 | 3 | 4 | 5 | 6 | 7 | 8 | ⋯ | 19 | ⋯ | 40 | ⋯ | 46 | 47 |
|---|---|---|---|---|---|---|---|---|---|---|---|---|---|---|---|
| PART NUMBER | A1 | A4 | B7 | C3 | E1 | F3 | B2 | A6 | ⋯ | A5 | ⋯ | A2 | ⋯ | E5 | B2 |

REARRANGE NUMBERS 1 TO 4
(NUMBERS 5 TO 47 ARE IN INITIAL ARRANGEMENT
ORDER) TO OPTIMIZE OBJECTIVE VARIABLE

⇩

DETERMINE                REMAIN IN INITIAL ORDER

| ORDER | 1 | 2 | 3 | 4 | 5 | 6 | 7 | 8 | ⋯ | 19 | ⋯ | 40 | ⋯ | 46 | 47 |
|---|---|---|---|---|---|---|---|---|---|---|---|---|---|---|---|
| PART NUMBER | A4 | A1 | B7 | C3 | E1 | F3 | B2 | A6 | ⋯ | A5 | ⋯ | A2 | ⋯ | E5 | B2 |

REARRANGE NUMBERS 5 TO 8
(NUMBERS 9 TO 47 ARE IN INITIAL ARRANGEMENT
ORDER) TO OPTIMIZE OBJECTIVE VARIABLE

⇩

...

# FIG. 16

**INFORMATION PROCESSING APPARATUS** — 10

- INITIALIZATION UNIT — 21
- OUTPUT UNIT — 22
- INITIALIZATION UNIT — 11
- CONTROL UNIT — 20
  - INITIAL DETERMINATION UNIT — 31
  - TARGET SETTING UNIT — 32
  - PARTIAL CUTOUT UNIT — 33
- DISPLAY UNIT — 12
- STORAGE UNIT — 13
  - OPTIMIZATION RESULT — 17

**ANNEALING COMPUTER** — 90

- CONTROL UNIT — 81
  - PARTIAL REPLACEMENT UNIT — 34
  - ORDER COMBINATION UNIT — 35
  - QUALITY CALCULATION UNIT — 36
  - QUALITY EVALUATION UNIT — 37
  - HEAD DETERMINATION UNIT — 38
- PRODUCT ALLOCATION RULE — 14
- PART INFORMATION — 15
- QUALITY INFORMATION — 16

# FIG. 17

INFORMATION PROCESSING APPARATUS ⟋10

MEMORY ⟋10c

PROCESSOR ⟋10d

COMMUNICATION DEVICE ⟋10a

HDD ⟋10b

# EP 4 123 459 A1

<table>
<tr><td colspan="2"><b>INTERNATIONAL SEARCH REPORT</b></td><td colspan="2">International application No.<br>PCT/JP2020/012144</td></tr>
</table>

**A. CLASSIFICATION OF SUBJECT MATTER**
Int. Cl. G06F11/22(2006.01)i
FI: G06F11/22 689

According to International Patent Classification (IPC) or to both national classification and IPC

**B. FIELDS SEARCHED**

Minimum documentation searched (classification system followed by classification symbols)
Int. Cl. G06F11/22

Documentation searched other than minimum documentation to the extent that such documents are included in the fields searched
Published examined utility model applications of Japan    1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-202563 A (FANUC LTD.) 16 November 2017, | 1-3, 7-8 |
| A | paragraphs [0019]-[0039] | 4-6 |
| A | JP 5-113326 A (NACHI-FUJIKOSHI CORP.) 07 May 1993, entire text, all drawings | 1-8 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>14.07.2020 | Date of mailing of the international search report<br>28.07.2020 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**
Information on patent family members

| Patent Documents referred to in the Report | Publication Date | Patent Family | Publication Date |
|---|---|---|---|
| JP 2017-202563 A | 16.11.2017 | US 2017/0329874 A1 paragraphs [0024]-[0043], fig. 1-4 DE 102017004440 A1 CN 107368046 A | |
| JP 5-113326 A | 07.05.1993 | (Family: none) | |

International application No.

PCT/JP2020/012144

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002024399 A

- JP 2010217982 A